(19) Europäisches Patentamt / European Patent Office / Office européen des brevets

(11) **EP 3 734 847 B1**

(12) **EUROPEAN PATENT SPECIFICATION**

(45) Date of publication and mention of the grant of the patent:
**21.08.2024 Bulletin 2024/34**

(21) Application number: **19738946.3**

(22) Date of filing: **11.01.2019**

(51) International Patent Classification (IPC):
**H04L 5/00** *(2006.01)*    **H04B 1/74** *(2006.01)*
**H04L 1/1867** *(2023.01)*    **H04W 72/0446** *(2023.01)*
**H04L 1/08** *(2006.01)*

(52) Cooperative Patent Classification (CPC):
**H04L 5/0092; H04B 1/74; H04L 1/189;**
**H04L 5/0053; H04W 72/0446; H04L 1/08;**
H04L 1/1887; H04L 5/0055; H04W 72/23

(86) International application number:
**PCT/CN2019/071284**

(87) International publication number:
**WO 2019/137455 (18.07.2019 Gazette 2019/29)**

(54) **RESOURCE CONFIGURATION METHOD, COMMUNICATION APPARATUS, AND COMPUTER PROGRAM**

RESSOURCENKONFIGURATIONSVERFAHREN, KOMMUNIKATIONSVORRICHTUNG, UND COMPUTERPROGRAMM

PROCÉDÉ DE CONFIGURATION DE RESSOURCE, APPAREIL DE COMMUNICATION ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.01.2018 CN 201810032703**

(43) Date of publication of application:
**04.11.2020 Bulletin 2020/45**

(73) Proprietor: **Huawei Technologies Co., Ltd.**
**Longgang**
**Shenzhen, Guangdong 518129 (CN)**

(72) Inventors:
- **XU, Xiuqiang**
  **Shenzhen, Guangdong 518129 (CN)**
- **CHEN, Yan**
  **Shenzhen, Guangdong 518129 (CN)**
- **WANG, Yi**
  **Shenzhen, Guangdong 518129 (CN)**
- **WU, Yiqun**
  **Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 107 005 960    CN-A- 107 079 409
CN-A- 107 431 591    US-A1- 2016 043 841

- HUAWEI ET AL: "UL data transmission procedure with and without UL grant", vol. RAN WG1, no. Prague, Czech Republic; 20171009 - 20171013, 8 October 2017 (2017-10-08), XP051340282, Retrieved from the Internet <URL:http://www.3gpp.org/ftp/Meetings_3GPP_SYNC/RAN1/Docs/> [retrieved on 20171008]
- LG ELECTRONICS: "Discussion on UL data transmission procedure", vol. RAN WG1, no. Prague, CZ; 20171009 - 20171013, 8 October 2017 (2017-10-08), XP051341152, Retrieved from the Internet <URL:http://www.3gpp.org/ftp/Meetings_3GPP_SYNC/RAN1/Docs/> [retrieved on 20171008]

- **VIVO: "Support of UL data transmission without grant", vol. RAN WG1, no. Nagoya, Japan; 20170918 - 20170921, 11 September 2017 (2017-09-11), XP051329118, Retrieved from the Internet <URL:http://www.3gpp.org/ftp/tsg_ran/WG1_RL1/TSGR1_AH/NR_AH_1709/Docs/> [retrieved on 20170911]**
- **HUAWEI ET AL: "Summary of remaining issues on UL data transmission procedure", 3GPP TSG RAN WG1 MEETING #92BIS, R1-1804295, 20 April 2018 (2018-04-20), XP051413864**
- **HUAWEI ET AL: "UL data transmission procedure with and without UL grant", 3GPP TSG RAN WG1 MEETING #90BIS, R1-1717091, 13 October 2017 (2017-10-13), XP051340282**
- **INTEL CORPORATION: "UL data transmission procedures in NR", 3GPP TSG RAN WG1 MEETING 90BIS, R1-1717396, 13 October 2017 (2017-10-13), XP051340586**

## Description

### TECHNICAL FIELD

This application relates to the communications field, and more specifically, to a resource configuration method, a communications apparatus, and a computer program product.

### BACKGROUND

In the prior art, there is a transmission mode, to be specific, grant-free transmission. The grant-free transmission is also referred to as transmission without dynamic scheduling (transmission without dynamic scheduling) or transmission without dynamic grant (transmission without dynamic grant). In the transmission mode, when performing uplink transmission, a terminal device may directly perform, without dynamic scheduling/grant of a network device, uplink transmission based on a transmission resource and/or parameter configured by the network device for the terminal device, reducing a transmission latency. In the prior art, the network device may configure, for the terminal device by using a configured grant, the transmission resource and/or parameter used for the grant-free transmission. There are two types of configured grants: a configured grant type 1 (configured grant type 1) and a configured grant type 2 (configured grant type 2).

In addition, to improve transmission reliability of uplink data in the transmission mode, a repetition mechanism is proposed. To be specific, within a time domain period, the terminal device may transmit a plurality of repetitions of a same piece of uplink data within the time domain period. Each repetition may be a same redundancy version of the same piece of uplink data, or may be a different redundancy version.

Therefore, how to implement a plurality of repetitions of the uplink based on the repetition mechanism to improve the data transmission reliability is an urgent problem to be resolved in the industry.

3GPP DRAFT R1-1717091 discloses "Slot-based GF resource configuration" and "Mini-slot based GF resource configuration", in Option Y of the "Mini-slot based GF resource configuration", multiple mini-slot based repetitions can be performed within one slot.

3GPP DRAFT R1-1717968 discloses views on the design of UL data transmission with and without grant. Especially, it focus on transmission procedure of UL data transmission without grant, including resource configuration for repetition and TB identification. It also proposes some options down-selected from previous agreement. This contribution is revised from R1-1715888.

3GPP DRAFT R1-1715645 discloses views on the remaining issues for design of UL grant-free transmission, such as resource configuration for Type 1/2 grant-free, HARQ related issues and power control.

## SUMMARY

The present invention is defined by the appended claims. Embodiments not covered by the scope of the claims are considered useful for understanding the context of the invention. This application provides a resource configuration method, a communications apparatus, and a computer program product to improve data transmission reliability.

According to a first aspect, a resource configuration method according to claim 1 is provided, and is applied to a communications apparatus.

According to a second aspect, a communications apparatus according to claim 5 is provided. The communications apparatus is configured to perform the operations in any possible implementation of the first aspect. Specifically, the communications apparatus includes module units configured to perform the operations in any possible implementation of the first aspect. The module units included in the communications apparatus may be implemented by using software and/or hardware.

According to a third aspect, a computer program product according to claim 9 is provided. The computer program product includes computer program code. When the computer program code is run by a communications unit and a processing unit or a transceiver and a processor of a communications device (for example, a terminal device), the communications device is enabled to perform the method according to any one of the first aspect or the possible implementations of the first aspect.

### BRIEF DESCRIPTION OF DRAWINGS

     FIG. 1 is a schematic diagram of a communications system to which a resource configuration method is applied;
     FIG. 2 is a schematic interaction diagram of a resource configuration method;
     FIG. 3 to FIG. 6 each are a schematic diagram of N TOs determined in a first TO determining manner;
     FIG. 7 to FIG. 13 each are a schematic diagram of N TOs determined in a second TO determining manner;
     FIG. 14 is a schematic block diagram of a communications apparatus; and
     FIG. 15 is a schematic structural diagram of a terminal device.

### DESCRIPTION OF EMBODIMENTS

The following describes technical solutions of this application with reference to accompanying drawings.

The technical solutions in the embodiments of this application may be applied to various communications systems, such as a long term evolution (long term evolution, LTE) system, an LTE frequency division duplex (frequency division duplex, FDD) system, an LTE time division duplex (time division duplex, TDD) a 5th generation (5th generation, 5G) system, or a new radio (new radio, NR) system.

A terminal device in the embodiments of this application may be user equipment, an access terminal, a subscriber unit, a subscriber station, a mobile station, a mobile console, a remote station, a remote terminal, a mobile device, a user terminal, a terminal, a wireless communications device, a user agent, or a user apparatus. Alternatively, the terminal device may be a cellular phone, a cordless phone, a session initiation protocol (session initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in the future 5G network, or a terminal device in a future evolved public land mobile network (public land mobile network, PLMN). This is not limited in the embodiments of this application.

A network device in the embodiments of this application may be a device configured to communicate with the terminal device. The network device may be an evolved NodeB (evolved NodeB, eNB or eNodeB) in the LTE system, or may be a radio controller in a cloud radio access network (cloud radio access network, CRAN) scenario. Alternatively, the network device may be a relay station, an access point, a vehicle-mounted device, a wearable device, a network device in the 5G network, a network device in the evolved PLMN, or the like. This is not limited in the embodiments of this application.

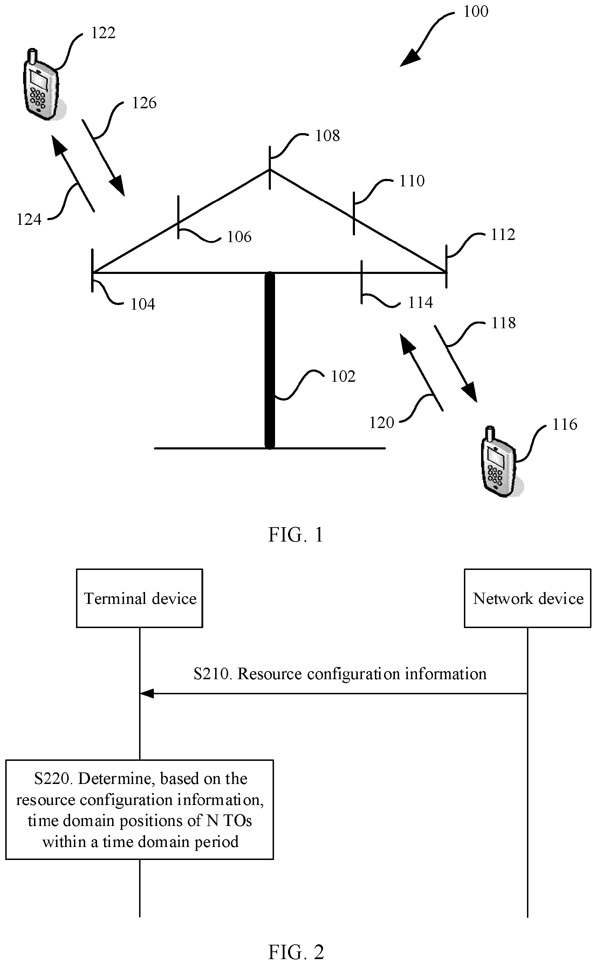

FIG. 1 is a schematic diagram of a communications system 100 to which a resource configuration method according to an embodiment of this application is applied. As shown in FIG. 1, the communications system 100 includes a network device 102. The network device 102 may include a plurality of antennas, such as antennas 104, 106, 108, 110, 112, and 114. In addition, the network device 102 may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

The network device 102 may communicate with a plurality of terminal devices (for example, a terminal device 116 and a terminal device 122). However, it may be understood that the network device 102 may communicate with any quantity of terminal devices that are similar to the terminal device 116 or 122. The terminal devices 116 and 122 may each be, for example, a cellular phone, a smartphone, a portable computer, a handheld communications device, a handheld computing device, a satellite radio apparatus, a global positioning system, a PDA, and/or any other suitable device configured to perform communication in the wireless communications system 100.

As shown in FIG. 1, the terminal device 116 communicates with the antennas 112 and 114. The antennas 112 and 114 send information to the terminal device 116 over a forward link 118, and receive information from the terminal device 116 over a reverse link 120. In addition, the terminal device 122 communicates with the antennas 104 and 106. The antennas 104 and 106 send information to the terminal device 122 over a forward link 124, and receive information from the terminal device 122 over a reverse link 126.

For example, in a frequency division duplex (frequency division duplex, FDD) system, the forward link 118 may use a frequency band different from that used by the reverse link 120, and the forward link 124 may use a frequency band different from that used by the reverse link 126.

For another example, in a time division duplex (time division duplex, TDD) system and a full duplex (full duplex) system, the forward link 118 may use a frequency band same as that used by the reverse link 120, and the forward link 124 may use a frequency band same as used by the reverse link 126.

In a given time, the network device 102 and the terminal device 116 or the terminal device 122 may each be a wireless communications sending apparatus and/or a wireless communications receiving apparatus. When sending data, the wireless communications sending apparatus may encode data for transmission.

Specifically, the wireless communications sending apparatus may obtain (for example, generate, receive from another communications apparatus, or store in a memory) a specific quantity of data bits that are to be sent to the wireless communications receiving apparatus through a channel. The data bits may be included in a transport block (or a plurality of transport blocks) of the data, and the transport block may be segmented to produce a plurality of code blocks.

In addition, the communications system 100 may be a public land mobile network (public land mobile network, PLMN), a D2D network, an M2M network, or another network. FIG. 1 is only an example of a simplified schematic diagram. The network may further include another network device not shown in FIG. 1.

The following first briefly describes an application scenario of the embodiments of this application.

The embodiments of this application are applied to a grant-free transmission scenario. In grant-free transmission, when performing uplink transmission, the terminal device may directly perform uplink transmission based on a grant-free resource without sending an SR to the network device or waiting for the network device to send UL grant information. The grant-free resource may be understood as a resource that is preconfigured by the network device for the terminal device and that is used to transmit uplink data.

Optionally, the grant-free resource may be a periodic resource.

Within a time domain period, the grant-free resource may be a resource including N TOs. In other words, the time domain period includes the N TOs. The N TOs may be used to transmit a plurality of repetitions of an uplink data packet. Each repetition may be a same redundancy version of the uplink data packet, or may be a different redundancy version. N is an integer greater than or equal to 1. One TO within the time domain period may be used to transmit one repetition of the uplink data packet. The TO is defined as a time domain resource used for one time of uplink transmission of a data packet.

The following describes in detail steps of a resource configuration method 200 according to an embodiment of this application with reference to FIG. 2 from a perspective of device interaction.

In S210, a terminal device receives resource configuration information sent by a network device, where the resource configuration information includes indication information used to indicate a time domain period and indication information used to indicate a transmission occasion TO determining manner, and the TO determining manner includes a first TO determining manner or a second TO determining manner.

First, the indication information (denoted as indication information #A for ease of differentiation and understanding) used to indicate the time domain period (denoted as a time domain period #A for ease of description) may be used to indicate a time domain length of the time domain period #A. The time domain length of the time domain period #A may be P symbols. P is an integer greater than 1. Alternatively, the time domain length of the time domain period #A may be a value in a unit of ms.

Then, indication information (denoted as indication information #B for ease of differentiation and understanding) used to indicate the transmission occasion TO determining manner indicates the first TO determining manner or the second TO determining manner. Simply speaking, the first TO determining manner indicates that the terminal device may determine a TO within the time domain period #A on consecutive slots, and one slot includes at most one TO. The second TO determining manner indicates that the terminal device may determine a TO within the time domain period #A on consecutive slots, and each of at least one of slots included in the time domain period #A may include at least one TO. For specific descriptions of the two TO determining manners, refer to the following related descriptions. Only brief descriptions are provided herein.

The resource configuration information further includes the following content:

Optionally, time domain resource offset parameter, used to determine a start symbol of a time domain period.

Time domain resource allocation parameter, including a parameter used to indicate a time domain length of a TO, that is, a quantity of symbols occupied by the TO, and further including a parameter used to indicate a start symbol of the TO.

In addition, the time domain resource allocation parameter may be used to determine a time domain position of the first of all TOs. Herein, all the TOs represent TOs in all time domain periods instead of all TOs in a time domain period (for example, the time domain period #A). Specifically, in a time domain period (for example, the time domain period #A), the terminal device may jointly determine, based on the indication information #A used to indicate the time domain period #A and the time domain resource allocation parameter, all TOs that are in the time domain period #A and that are indicated by the network device.

In addition, in this embodiment of this application, within a time domain period, a TO finally determined by the terminal device may not be completely the same as the TO indicated by the time domain resource allocation parameter. For ease of description, within a time domain period, a TO indicated by the network device by using the time domain resource allocation parameter is denoted as a candidate TO. An explanation of a candidate TO below is the same as that herein.

Specifically, the terminal device may determine a start symbol of a candidate TO by using a formula mod(n-1, T)=0. That is, a symbol meeting the formula is a start symbol of a candidate TO. mod(n-1, T) represents a modulo operation performed on n-1 by using T. n is an index of a symbol within the time domain period #A, and $1 \leq n \leq P$. P is a quantity of symbols occupied by the time domain period #A. T indicates a quantity of symbols occupied by a TO, and T may be determined based on the time domain resource allocation parameter. Further, after a start symbol of a candidate TO is determined, the start symbol of the candidate TO plus T symbols following the start symbol of the candidate TO is a time domain position of the candidate TO.

Repetition quantity information: used to indicate a maximum quantity K of times of repeatedly sending uplink data within a time domain period.

In this way, the terminal device may determine K TOs within a time domain period (for example, the time domain period #A). In other words, the terminal device may configure the K TOs within the time domain period.

However, it should be noted that K is a maximum quantity, configured by a system, of times of repeatedly sending uplink data within a time domain period. In other words, K is a quantity, configured by the system, of TOs that may be determined by the terminal device within the time domain period. Actually, when the terminal device determines a TO within the time domain period based on an actual situation, a quantity of determined TOs (for example, the quantity of the TOs within the time domain period is N) may not be equal to K. N may be greater than, equal to, or less than K.

For example, although the terminal device may determine the K TOs, when at least some symbols of a TO suddenly cannot be used for grant-free uplink data transmission, the terminal device may discard the TO based on a protocol or a system stipulation. In this way, the quantity of the actually determined TOs within the time domain period is less than K.

In S220, the terminal device determines, based on the resource configuration information, time domain positions of N TOs within the time domain period, where N is an integer greater than or equal to 1.

To be specific, the terminal device may determine the time domain positions of the N TOs within the time domain period #A based on the indication information #A, the terminal device may determine the time domain positions of the N TOs within the time domain period #A based on the indication information #B, or the terminal device may determine the time domain positions of the N TOs within the time domain period #A based on the indication information #A and the indication information #B.

For a specific manner of determining the time domain positions of the N TOs, refer to the following related descriptions.

Therefore, according to the resource configuration manner provided in this embodiment of this application, the terminal device receives the resource configuration information sent by the network device, and determines, based on the indication information used to indicate the time domain period and the indication information used to indicate the TO determining manner, the time domain positions of the N TOs within the time domain period, where the resource configuration information includes the indication information used to indicate the time domain period and/or the indication information used to indicate the TO determining manner, so that the terminal device repeatedly sends uplink data on the N TOs, improving data transmission reliability.

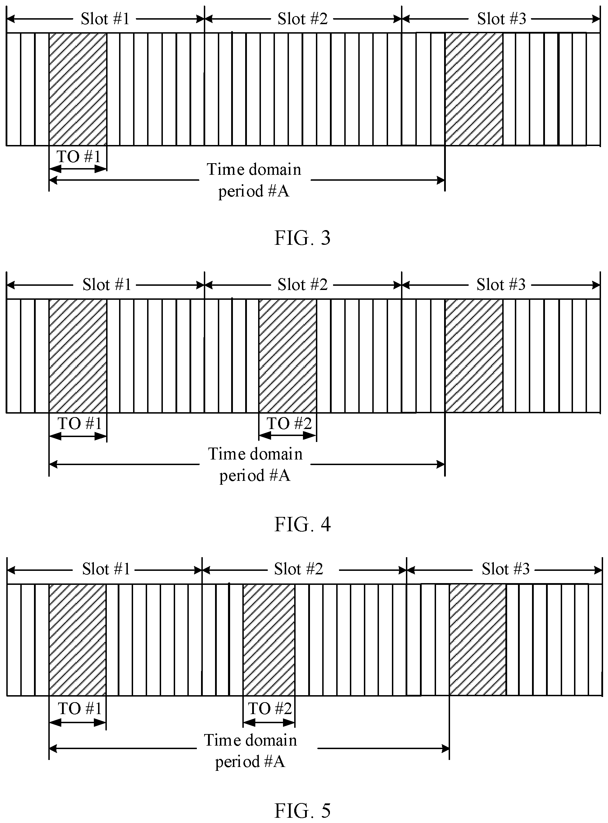

With reference to FIG. 3 to FIG. 13, the following describes in detail a plurality of manners in which the terminal device determines the N TOs based on the resource configuration information in this embodiment of this application.

First, an available symbol in this embodiment of this application is described.

In this embodiment of this application, the available symbol indicates a symbol that is in a slot and that can be used for uplink grant-free data transmission. For example, the available symbol is a symbol configured by the network device by using radio resource control (radio resource control, RRC) signaling or downlink control information (downlink control information, DCI) to be used for uplink transmission. For another example, the available symbol is an uplink symbol that is configured by the network device by using RRC signaling or DCI to be used for uplink transmission and not used to transmit other content. The other content may include uplink control information (uplink control information, UCI), a scheduling request (scheduling request, SR), hybrid automatic repeat request (hybrid automatic repeat reQuest, HARQ) feedback, a sounding reference signal (sounding reference signal, SRS), a channel state information (channel state information, CSI) report, and the like.

Then, the first TO determining manner and the second TO determining manner are separately described.

First TO determining manner

In the first TO determining manner, the terminal device may determine the time domain positions of the N TOs in a plurality of consecutive slots within the time domain period #A, and each of the plurality of consecutive slot includes at most one TO.

In other words, an existence form of a TO in the plurality of consecutive slots may include the following case: Each of the plurality of consecutive slots includes one TO, and a time domain position of each TO in the slot is determined by the time domain resource allocation parameter; or each of some of the plurality of consecutive slots includes one TO, none of other slots includes a TO, and a time domain position of each TO in the slot is determined by the time domain resource allocation parameter.

In the first TO determining manner, the terminal device determines the time domain positions of the N TOs in the first N slots within the time domain period #A. Each of the first N slots includes one TO, and a time domain position of each TO in a corresponding slot is determined by the time domain resource allocation parameter. For example, a TO is located on available symbols that are in all symbols indicated by the time domain resource allocation parameter and that are in a corresponding slot.

A feature of the N TOs determined based on the first TO determining manner is described with reference to FIG. 3 to FIG. 6 by using an example in which the time domain length of the time domain period #A is 28 symbols, and the slots included in the time domain period #A are a slot #1, a slot #2, and a slot #3.

As shown in FIG. 3, the determined TO is only in the slot #1. That is, N=1. In addition, symbols occupied by the TO (that is, a TO #1) in the slot #1 are consecutive.

As shown in FIG. 4, the determined TOs are in the slot #1 and the slot #2. That is, N=2. The two TOs (that is, a TO #1 and a TO #2) each are continuous. The two TOs occupy a same quantity of symbols. In addition, a position of a start symbol occupied by the TO #1 in the slot #1 is different from that of a start symbol occupied by the TO #2 in the slot #2. For example, a time domain position of a TO that is indicated by the time domain resource allocation parameter is the fourth to the seventh symbols in a slot. For the TO #2, the fourth symbol in the slot #2 is not an available symbol. Therefore, the fifth to the eighth available symbols in the slot #2 may be determined as a time domain position of the TO #2.

As shown in FIG. 5, the determined TOs are in the slot #1 and the slot #2. That is, N=2. The two TOs (that is, a TO #1 and a TO #2) each are continuous. In addition, a start symbol of the TO #1 in the slot #1 is the same as that of the TO #2 in the slot #2. That is, the start symbols are the third symbol. However, the two TOs occupy different quantities of symbols. To be specific, the TO #1 occupies four symbols, and the TO #2 occupies three symbols. For example, a time domain position of a TO that is indicated by the time domain resource allocation parameter is the fourth to the seventh symbols in a slot. For the TO #2, the seventh symbol in the slot #2 is not an available symbol. Therefore, the fourth to the sixth available symbols in the slot #2 may be determined as a time domain position of the TO #2.

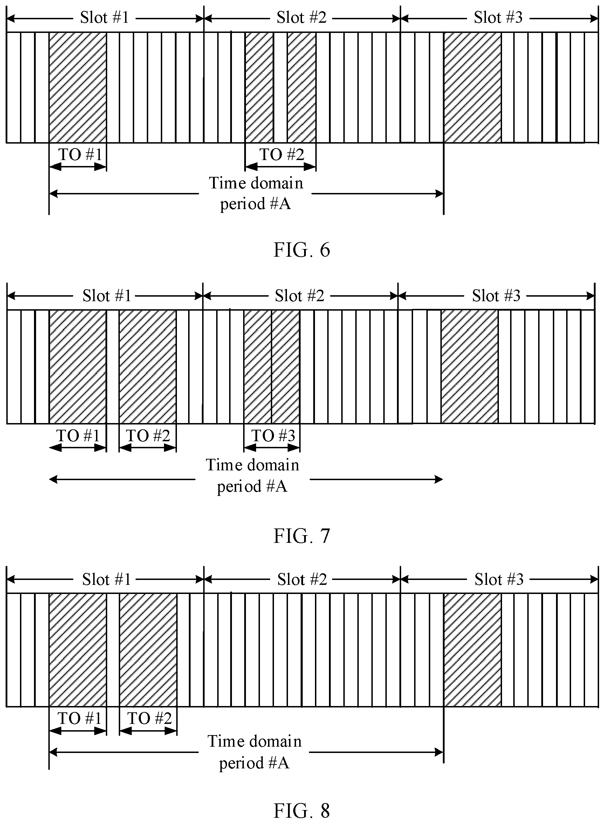

As shown in FIG. 6, the determined TOs are in the slot #1 and the slot #2. That is, N=2. The two TOs (that is, a TO #1 and a TO #2) occupy a same quantity of symbols, to be specific, four symbols. In addition, a start symbol of the TO #1 in the slot #1 is the same as that of the TO #2 in the slot #2. That is, the start symbols are the third symbol. However, the TO #1 is continuous, and the TO #2 is discontinuous.

Therefore, symbols occupied by a TO may be consecutive, for example, TOs shown in FIG. 3 to FIG. 5, or symbols occupied by a TO may be inconsecutive, for example, TO #2 shown in FIG. 6. When each of at least two slots includes one TO, the two TOs may occupy a same quantity of symbols, for example, the TOs shown in FIG. 4 or FIG. 6, or the two TOs may occupy different quantities of symbols, for example, the TOs shown in FIG. 5. When each of at least two slots includes one TO, start symbols of the two TOs may be the same in corresponding slots, for example, the TOs shown in FIG. 5 or FIG. 6, or start symbols of the two TOs may be different in corresponding slots, for example, the TOs shown in FIG. 4.

Specifically, when determining the N TOs on the plurality of consecutive slots, the terminal device may determine the N TOs specifically in the following three manners (that is, a manner #1A, a manner #1B, and a manner #1C).

Manner #1A

As described above, the resource configuration information further includes the time domain resource allocation parameter, and the time domain resource allocation parameter includes the parameter used to indicate the quantity of the symbols occupied by the TO.

In the manner #1A, for ease of description, a process in which the terminal device determines a TO is used as an example for description.

When there is an available symbol in a slot, a quantity y of available symbols is less than or equal to a quantity x that is of symbols occupied by a TO and that is indicated by the time domain resource allocation parameter. When

$$\frac{y}{x} \geq t$$

rameter. When , it is considered that the TO may be configured in the slot, and a quantity of symbols occupied by an actually determined TO is y. When

$$\frac{y}{x} \geq t$$

, it is considered that the TO may not be configured in the slot.

t is a preset value. The preset value may be specified in a protocol or a system, or may be delivered by the network device to the terminal device by using higher layer signaling (for example, RRC signaling) or bottom layer signaling (for example, a media access control (media access control, MAC) control element (control element, CE) or DCI).

For example, it is assumed that the quantity x that is of the symbols occupied by the TO and that is indicated by the time domain resource allocation parameter is 4, there are only three available symbols in a slot within the time domain period #A, and t is 0.5.

$$\frac{y}{x} = 0.75 > 0.5$$

indicates that the TO may be configured in the slot. The TO determined in this case may correspond to the TO #2 shown in FIG. 5, and the TO #2 occupies three symbols.

By way of example rather than limitation, the time domain positions of the N TOs that are determined in the manner A may alternatively be the time domain positions in any one of FIG. 3 to FIG. 6.

Manner #1B

The resource configuration information further includes the time domain resource allocation parameter. The time domain resource allocation parameter includes the parameter used to indicate the quantity of the symbols occupied by the TO and the parameter used to indicate the start symbol of the TO. The terminal device may determine, based on the time domain resource allocation parameter, a time domain position of each of the TOs (namely, candidate TOs) that are within the time domain period #A and that are indicated by the network device. For a specific determining manner, refer to the foregoing related descriptions. Details are not described herein again.

In the time domain period #A, starting from the first slot within the time domain period #A, the TOs indicated by the network device are determined based on the time domain resource allocation parameter, and available symbols in the TOs indicated by the network device are determined as a time domain position of a TO. In other words, available symbols in candidate TOs that are in each slot and that are indicated by the time domain resource allocation parameter are determined as the time domain position of the TO, until the time domain positions of the N TOs are determined within the time domain period #A or a time domain position of the last TO is determined in the last slot within the time domain period #A.

It should be noted that available symbols in symbols indicated by the time domain resource allocation parameter are symbols indicated by the network device as "uplink". Information used to indicate the "uplink" symbols may be carried in RRC signaling used to configure a symbol direction in a slot. The symbol direction includes three types: "uplink", "downlink", or "flexible". A symbol whose symbol direction is "uplink" is used for uplink transmission, a symbol whose symbol direction is "downlink" is used for downlink transmission, and a symbol whose symbol direction is "flexible" represents a flexible symbol.

Therefore, in a slot, the available symbols in the symbols indicated by the time domain resource allocation parameter may be all or some of the symbols indicated by the time domain resource allocation parameter, provided that the symbols are available symbols.

For example, assuming that the symbols indicated by the time domain resource allocation parameter are the fourth to the seventh symbols in a slot, in FIG. 4, available symbols in the TO #1 determined in the time domain period #A are all of the symbols indicated by the time domain resource allocation parameter; in FIG. 5, available symbols in the TO #2 determined in the time domain period #A are some of the symbols indicated by the time domain resource allocation parameter.

Manner #1C

In the time domain period #A, available symbols in symbols that are in the first slot and that are indicated by the time domain resource allocation parameter are determined as a time domain position of the first TO. In other words, available symbols in candidate TOs that are in the first slot and that are indicated by the time domain resource allocation parameter are determined as the time domain position of the first TO. Starting from the second slot within the time domain period #A, symbols that are in each slot and that have same positions as symbols of the first TO in the first slot are determined as another TO within the time domain period #A, until the time domain positions of the N TOs are determined within the time domain period #A or a time domain position of the last TO is determined in the last slot within the time domain period #A.

Same as the explanation in the manner #1B, available symbols in symbols indicated by the time domain resource allocation parameter are symbols indicated by the network device as "uplink". Information used to indicate the "uplink" symbols may be carried in RRC signaling used to configure a symbol direction in a slot. The symbol direction includes three types: "uplink", "downlink", or "flexible". A symbol whose symbol direction is "uplink" is used for uplink transmission, a symbol whose symbol direction is "downlink" is used for downlink transmission, and a symbol whose symbol direction is "flexible" represents a flexible symbol.

It should be noted that time domain positions of all TOs within a time domain period are completely the same in respective slots in the manner #1C. However, time domain positions of TOs in different periods may be different. This is not limited in this embodiment of this application.

Second TO determining manner

In the second TO determining manner, the terminal device may determine the TOs within the time domain period #A in the consecutive slots. Each of the at least one of the slots included in the time domain period #A may include at least one TO. In other words, in the slots included in the time domain period #A, one or more TOs may be determined in a slot provided that a condition is met.

Likewise, a feature of the N TOs determined in the second TO determining manner is described with reference to FIG. 7 to FIG. 13 by using an example in which the time domain length P of the time domain period #A is equal to 28, and the slots included in the time domain period #A are a slot #1, a slot #2, and a slot #3.

As shown in FIG. 7, the determined TOs are in the slot #1 and the slot #2. In addition, there are two TOs (that is, a TO #1 and a TO #2) in the slot #1, and there is one TO (that is, a TO #3) in the slot #2. That is, N=3. In addition, each TO occupies a same quantity of symbols, and symbols occupied by the TO are consecutive. The TO #1 and the TO #2 that are neighboring and that are in the same slot #1 are inconsecutive.

As shown in FIG. 8, the determined TOs are only in the slot #1. There are two TOs (that is, a TO #1 and a TO #2) in the slot #1. That is, N=2. In addition, each TO occupies a same quantity of symbols, and symbols occupied by the TO are consecutive. The TO #1 and the TO #2 that are neighboring and that are located in the same slot #1 are inconsecutive.

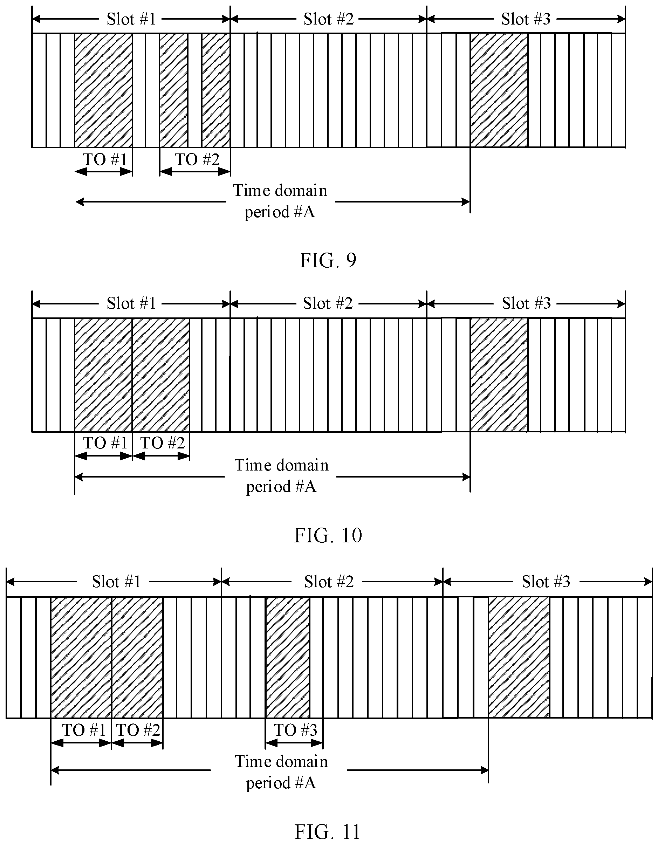

As shown in FIG. 9, the determined TOs are only in the slot #1. There are two TOs (that is, a TO #1 and a TO #2) in the slot #1. That is, N=2. In addition, each TO occupies a same quantity of symbols, symbols occupied by the TO #1 are consecutive, and symbols occupied by the TO #2 are inconsecutive. TO #1 and TO #2 that are neighboring and that are in the same slot #1 are inconsecutive.

As shown in FIG. 10, the determined TOs are only in the slot #1. There are two TOs (that is, a TO #1 and a TO #2) in the slot #1. That is, N=2. In addition, each TO occupies a same quantity of symbols, and symbols occupied by the TO are consecutive. TO #1 and TO #2 that are neighboring and that are in the same slot #1 are consecutive.

As shown in FIG. 11, the determined TOs are in the slot #1 and the slot #2. In addition, there are two TOs (that is, a TO #1 and a TO #2) in the slot #1, and there is one TO (that is, a TO #3) in the slot #2. That is, N=3. In addition, a quantity of symbols occupied by the TO #2 and a quantity of symbols occupied by the TO #3 are the same, are 3, and are different from a quantity (that is, 4) of symbols occupied by the TO #1. However, symbols occupied by each TO are consecutive. The TO #1 and the TO #2 that are neighboring and that are in the same slot #1 are consecutive.

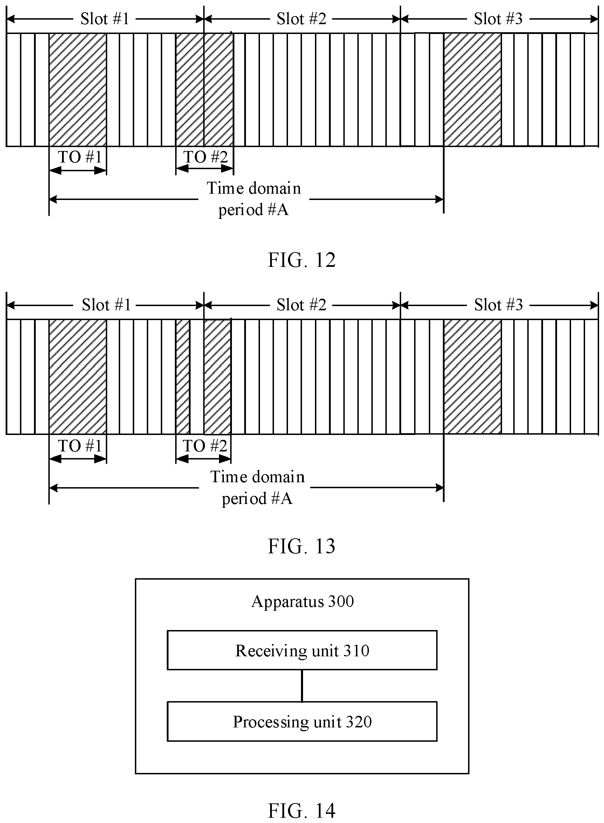

As shown in FIG. 12, the determined TOs are in the slot #1 and the slot #2. In addition, the first TO (that is, a TO #1) is in the slot #1, and the second TO (that is, a TO #2) is in the slot #1 and the slot #2. In other words, the TO #2 crosses slots, and N=2. In addition, a quantity of symbols occupied by the TO #1 and a quantity of symbols occupied by the TO #2 are the same, and are 4. Symbols occupied by each TO are consecutive. Two neighboring TOs are inconsecutive.

As shown in FIG. 13, the determined TOs are in the slot #1 and the slot #2. In addition, the first TO (that is, a TO #1) is in the slot #1, and the second TO (that is, a TO #2) is in the slot #1 and the slot #2. In other words, the TO #2 crosses slots, and N=2. In addition, a quantity of symbols occupied by the TO #1 and a quantity of symbols occupied by the TO #2 are the same, and are 4. Symbols occupied by the TO #2 are inconsecutive. The two neighboring TOs are inconsecutive.

Therefore, symbols occupied by a TO may be consecutive, for example, the TOs shown in FIG. 7 or FIG. 8, or may be inconsecutive, for example, the TO #2 shown in FIG. 9. A TO may be in a same slot, or may be in two slots, for example, as shown by the TO #2 in FIG. 12 or FIG. 13. When a slot includes a plurality of TOs, two neighboring TOs may be consecutive, for example, the TO #1 and the TO #2 shown in each of FIG. 10 to FIG. 11, or two neighboring TOs may be inconsecutive, for example, the TO #1 and the TO #2 shown in FIG. 9. When a slot includes a plurality of TOs, the two TOs may occupy a same quantity of symbols, for example, TO #1 and TO #2 shown in each of FIG. 7 to FIG. 10, or the two TOs may occupy different quantities of symbols, for example, the TO #1 and the TO #2 shown in FIG. 11.

Specifically, the second TO determining manner may include three manners (that is, a manner #2A, a manner #2B, and a manner #2C). The following separately describes the three manners in detail.

Manner #2A

The terminal device determines the first Y available symbols within the time domain period as a time domain position of the first TO within the time domain period, where Y is an integer greater than or equal to 1; and
the terminal device determines the first Z available symbols that are after the $n^{th}$ TO within the time domain period as a time domain position of the $(n+1)^{th}$ TO within the time domain period, where $1 \leq n < N$, and Z is an integer greater than or equal to 1.

Specifically, in the manner #2A, Y available symbols starting from the first symbol within the time domain period #A are determined as the time domain position of the first TO within the time domain period #A.

The Y available symbols are the first Y available symbols within the time domain period #A. After determining the time domain position of the first TO, the terminal device determines Z available symbols starting from a next symbol of the first TO as a time domain position of the second TO within the time domain period #A. The Z available symbols are the first Z available symbols that are after the first TO. The rest may be deduced by analogy until the time domain positions of all the TOs within the time domain period #A, that is, the time domain positions of the N TOs, are determined.

Optionally, the first Y available symbols within the time domain period are consecutive or inconsecutive, or the first Z available symbols after the $n^{th}$ TO are consecutive or inconsecutive.

Values of Y and Z may be specified in a protocol or a system, or may be delivered by the network device to the terminal device by using higher layer signaling (for example, RRC signaling) or bottom layer signaling (for example, a MAC CE or DCI).

It should be understood that the values of Y and Z may be the same or may be different. If the values of Y and Z are the same, the network device may deliver only one parameter to the terminal device.

In this embodiment of this application, the manner #2A may alternatively be described as follows:

If there are Y available symbols starting from the first symbol within the time domain period, the terminal device determines the Y available symbols as a time domain position of the first TO within the time domain period, where Y is an integer greater than or equal to 1; and
if there are Z available symbols starting from a next symbol of the $n^{th}$ TO within the time domain period, the terminal device determines the Z available symbols as a time domain position of the $(n+1)^{th}$ TO within the time domain period, where $1 \leq n < N$, and Z is an integer greater than or equal to 1.

Optionally, the Y available symbols are consecutive or inconsecutive, or the Z available symbols are consecutive or inconsecutive.

In other words, in the manner #2A, the terminal device determines whether there are the Y available symbols starting from the first symbol within the time domain period #A, determines the Y available symbols as the time domain position of the first TO within the time domain period #A if there are the Y available symbols, also determines whether there are the Z available symbols starting from the next symbol of the first TO after determining the time domain position of the first TO, and determines the Z available symbols as a time domain position of the second TO within the time domain period #A if there are the Z available symbols. The rest may be deduced by analogy until the time domain positions of all the TOs within the time domain period #A, that is, the time domain positions of the N TOs, are determined.

It should be understood that the Y available symbols may include the first symbol, or may not include the first symbol. When the first symbol is an available symbol, the Y available symbols include the first symbol. When the first symbol is an unavailable symbol, the Y available symbols do not include the first symbol. Likewise, the Z available symbols may include the next symbol of the $n^{th}$ TO, or may not include the next symbol of the $n^{th}$ TO. When the next symbol of the $n^{th}$ TO is an available symbol, the Z available symbols include the next symbol of the $n^{th}$ TO. When the next symbol of the $n^{th}$ TO is an unavailable symbol, the Z available symbols do not include the next symbol of the $n^{th}$ TO.

Using FIG. 7 to FIG. 13 as an example, the N TOs determined based on the manner #2A may be TOs in any form.

Manner #2B

The terminal device determines the first Y available symbols in a same slot and within the time domain period as a time domain position of the first TO within the time domain period; and

the terminal device determines the first Z available symbols that are after the $n^{th}$ TO within the time domain period as a time domain position of the $(n+1)^{th}$ TO within the time domain period, where $1 \leq n < N$, and Z is an integer greater than or equal to 1.

In other words, compared with the manner #2A, the first Y available symbols in the time domain period #A are in the same slot.

Optionally, that the terminal device determines the first Z available symbols that are after the $n^{th}$ TO as the time domain position of the $(n+1)^{th}$ TO within the time domain period includes:

determining, by the terminal device, the first Z available symbols that are in a same slot and after the $n^{th}$ TO within the time domain period as the time domain position of the $(n+1)^{th}$ TO.

That is, compared with the manner #2A, the first Z available symbols after the $n^{th}$ TO are in the same slot.

If the first Y available symbols within the time domain period #A are in the same slot and the first Z available symbols after the $n^{th}$ TO are in the same slot, using FIG. 7 to FIG. 13 as an example, the N TOs determined in the manner #2B may be TOs in any form in FIG. 7 to FIG. 11.

Optionally, the first Y available symbols in the same slot and within the time domain period are consecutive or inconsecutive, or the first Z available symbols in the same slot and after the $n^{th}$ TO are consecutive or inconsecutive.

For descriptions of Y and Z herein, refer to the foregoing descriptions of Y and Z in the manner #2A.

In this embodiment of this application, the manner #2B may alternatively be described as follows:

If there are Y available symbols starting from the first symbol within the time domain period, and the Y symbols are in a slot, the terminal device determines the Y available symbols as a time domain position of the first TO within the time domain period, where Y is an integer greater than or equal to 1; and

if there are Z available symbols starting from a next symbol of the $n^{th}$ TO within the time domain period, the terminal device determines the Z available symbols as a time domain position of the $(n+1)^{th}$ TO within the time domain period, where $1 \leq n < N$, and Z is an integer greater than or equal to 1.

That is, compared with the another description of the manner #2A, the Y available symbols are in the same slot.

Optionally, that if there are the Z available symbols starting from the next symbol of the $n^{th}$ TO within the time domain period, the terminal device determines the Z available symbols as the time domain position of the $(n+1)^{th}$ TO within the time domain period, where $1 \leq n < N$, and Z is an integer greater than or equal to 1 includes:

if there are Z available symbols starting from the next symbol of the $n^{th}$ TO within the time domain period, and the Z symbols are located in a slot, determining, by the terminal device, the Z available symbols as the time domain position of the $(n+1)^{th}$ TO within the time domain period, where $1 \leq n < N$, and Z is an integer greater than or equal to 1.

That is, compared with the another description of the manner #2A, the Z available symbols are in the same slot.

Manner #2C

The terminal device determines start symbols of M candidate TOs within the time domain period, where M is an integer greater than or equal to 1;

the terminal device determines Y available symbols from a start symbol of the $m^{th}$ candidate TO to a previous symbol of a start symbol of the $(m+1)^{th}$ candidate TO as a time domain position of a TO, where $1 \leq m < M$; and

the terminal device determines Z available symbols from a start symbol of the $M^{th}$ candidate TO to the last symbol within the time domain period as a time domain position of the last TO within the time domain period.

The Y available symbols are consecutive and the Z available symbols are consecutive.

In other words, in the manner #2C, the terminal device determines the N TOs based on the determined start symbols of the M candidate TOs. If a quantity of available symbols in start symbols of two neighboring candidate TOs are greater than or equal to Y, Y of the available symbols are used to configure one TO. The candidate TO is the TO indicated by the time domain resource allocation parameter.

Specifically, starting from the first candidate TO, if there are Y available symbols from a start symbol of the first candidate TO to a previous symbol of a start symbol of the second candidate TO, the Y available symbols are determined as a time domain position of the first TO. Starting from the second candidate TO, if there are Y available symbols from a start symbol of the second candidate TO to a previous symbol of a start symbol of the third candidate TO, the Y available symbols are determined as a time domain position of the second TO. The rest may be deduced by analogy until the last candidate TO (that is, the $M^{th}$ candidate TO) within the time domain period #A. If there are Z available symbols from a start symbol of the last candidate TO to the last symbol within the time domain period #A, the Z available symbols are determined as a time domain position of the last TO within the time domain period #A.

Values of Y and Z may be specified in a protocol or a system, or may be delivered by the network device to the terminal device by using higher layer signaling (for example, RRC signaling) or bottom layer signaling (for example, a MAC CE or DCI).

It should be understood that the values of Y and Z may be the same, or may be different. If the values of Y and Z are the same, the network device may deliver only one parameter to the terminal device.

It should be further understood that the Y available symbols may include the start symbol of the $m^{th}$ candidate TO and the previous symbol of the start symbol of the $(m+1)^{th}$ candidate TO, or may not include the start symbol of the $m^{th}$ candidate TO and the previous symbol of the start symbol of the $(m+1)^{th}$ candidate TO. Whether the Y available symbols include the start symbol of the $m^{th}$ candidate TO and the previous symbol of the start symbol of the $(m+1)^{th}$ candidate TO is specifically determined depending on whether the start symbol of the $m^{th}$ candidate TO and the previous symbol of the start symbol of the $(m+1)^{th}$ candidate TO are available symbols. Likewise, the Z available symbols may include the start symbol of the $M^{th}$ candidate TO and the last symbol within the time domain period, or may not include the start symbol of the $m^{th}$ candidate TO and the last symbol within the time domain period. Whether the Z available symbols include the start symbol of the $M^{th}$ candidate TO and the last symbol within the time domain period is specifically determined depending on whether the start symbol of the $M^{th}$ candidate TO and the last symbol within the time domain period are available symbols.

Optionally, that the terminal device determines the Y available symbols from the start symbol of the $m^{th}$ candidate TO to the previous symbol of the start symbol of the $(m+1)^{th}$ candidate TO as the time domain position of the TO includes:

determining, by the terminal device, Y available symbols in a same slot and from the start symbol of the $m^{th}$ candidate TO to the previous symbol of the start symbol of the $(m+1)^{th}$ candidate TO as the time domain position of the TO, where $1 \leq m < M$; and

that the terminal device determines the Z available symbols from the start symbol of the $M^{th}$ candidate TO to the last symbol within the time domain period as the time domain position of the last TO within the time domain period includes:

determining, by the terminal device, the Z available symbols in a same slot and from the start symbol of the $M^{th}$ candidate TO to the last symbol within the time domain period as the time domain position of the last TO within the time domain period.

In other words, the Y available symbols are in the same slot, and the Z available symbols are in the same slot.

Optionally, that the terminal device determines the start symbols of the M candidate TOs within the time domain period includes:

determining, by the terminal device, the start symbols of the M candidate TOs based on the time domain period and the time domain resource allocation parameter.

As described above, the time domain resource allocation parameter includes the parameter used to indicate the quantity of the symbols occupied by the TO. The terminal device determines the time domain period #A based on the indication information #A, and determines, in the time domain period #A, the start symbols of the M candidate TOs within the time domain period #A based on the time domain resource allocation parameter.

Specifically, the terminal device may determine a start symbol of each candidate TO by using a formula mod(n-1, T)=0. That is, a symbol meeting the formula is a start symbol of a candidate TO. mod(n-1, T) represents a modulo operation performed on n-1 by using T. n is an index of a symbol within the time domain period #A, and $1 \leq n \leq P$. P is a quantity of symbols occupied by the time domain period #A. T indicates a quantity of symbols occupied by a TO, and T may be determined based on the time domain resource allocation parameter, for example, indicated by the time domain resource allocation parameter.

Compared with the first TO determining manner, because a plurality of TOs may be configured in one slot in the second TO determining manner, a delay caused by transmitting data by using a repetition mechanism can be significantly reduced, and the second TO determining manner can be well applied to a scenario of a service having a relatively high requirement on a transmission delay and reliability.

The foregoing describes in detail the first TO determining manner and the second TO determining manner in this embodiment of this application. The following describes in detail a specific process in which the terminal device determines a target TO determining manner (the first TO determining manner or the second TO determining manner) based on the resource configuration information, and further determines the time domain positions of the N TOs in the target TO determining manner in this embodiment of this application.

In this embodiment of this application, the terminal device may determine the target TO determining manner based on the resource configuration information in three manners (namely, a manner #A, a manner #B, and a manner #C). The following separately describes the three manners.

Manner #A

The terminal device determines, based on a length of the time domain period, a TO determining manner to be used. For example:

If the time domain length of the time domain period is greater than a preset time domain length, the terminal device determines, in the first TO determining manner, the time domain positions of the N TOs within the time domain period P; or

if the time domain length of the time domain period is less than a preset time domain length, the terminal device determines, in the second TO determining manner, the time domain positions of the N TOs within the time domain period.

In this way, the terminal device may repeat the uplink data based on the N TOs.

The preset time domain length may be L symbols, the time domain length of the time domain period #A may be P symbols, where both L and P are integers greater than 1. Alternatively, the preset time domain length may be a value in a unit of ms, and the time domain length of the time domain period #A may be a value in a unit of ms.

Specifically, if the time domain length of the time domain period #A is greater than the preset time domain length, to some extent, it indicates that duration occupied by the time domain period #A is relatively long, and determining the time domain positions of the N TOs in the first TO determining manner can also meet a requirement. That is, the first TO determining manner is the target TO determining manner. On the contrary, if the time domain length of the time domain period #A is less than the preset time domain length, to some extent, it indicates that duration occupied by the time domain period #A is relatively short. To ensure data transmission reliability, the time domain positions of the N TOs may be determined in the second TO determining manner. That is, the second TO determining manner is the target TO determining manner.

By way of example rather than limitation, if the time domain length of the time domain period #A is equal to the preset time domain length, the terminal device may determine the time domain positions of the N TOs in the first TO determining manner or the second TO determining manner.

Optionally, the preset time domain length is a time domain length of a slot.

For example, it is assumed that the preset time domain length is a time domain length of a slot, and the slot is 14 symbols. That is, L=14. If P=28, that is, the time domain length of the time domain period #A is 28 symbols, the time domain positions of the N TOs are determined in the first TO determining manner. If P=7, the time domain positions of the N TOs are determined in the second TO determining manner.

Optionally, L=A*K, where A is a preset value, and K is a maximum quantity that is of times of repeatedly sending the uplink data within a time domain period and that is preset by a system. For specific descriptions of K, refer to the foregoing descriptions of the repetition quantity information used to indicate K. Details are not described herein again.

Optionally, A is a quantity of symbols occupied by a slot.

For example, it is assumed that the preset time domain length is a time domain length of a slot, and the slot is 14 symbols. That is, A=14. If K=2, L=28. If P=32, that is, the time domain length of the time domain period #A is 32 symbols, because 32>28, the time domain positions of the N TOs are determined in the first TO determining manner. If P=7, because 7<28, the time domain positions of the N TOs are determined in the second TO determining manner.

Therefore, according to the resource configuration method provided in this embodiment of this application, the terminal device determines the target TO determining manner (the first TO determining manner or the second TO determining manner) by comparing the time domain length of the time domain period with the preset time domain length, so that the terminal device determines, based on the target TO determining manner, the time domain positions of the N TOs within the time domain period, repeating the uplink data for a plurality of times in the N TOs based on the repetition mechanism, and improving data transmission reliability. In addition, for the target TO determining manner determined by the terminal device by comparing the time domain length of the time domain period with the preset time domain length, because a relationship between the time domain length of the time domain period and the preset time domain length is considered, a TO determined by the terminal device in the target TO determining manner can be better applicable to a case in which data is repeatedly sent within the time domain period.

Manner #B

The terminal device determines the time domain positions of the N TOs within the time domain period P based on the indication information used to indicate the TO determining manner.

That is, the terminal device determines the time domain positions of the N TOs based on the indication information (that is, the indication information #B) used to indicate the TO determining manner. The indication information #B indicates the first TO determining manner or the second TO determining manner.

In this way, the terminal device determines the time domain positions of the N TOs in the TO determining manner determined based on the indication information #B, and then repeatedly transmits the uplink data based on the N TOs.

By way of example rather than limitation, the indication information #B may alternatively be carried in information different from the resource configuration information. For example, the indication information #B is carried in RRC signaling.

Therefore, according to the resource configuration method provided in this embodiment of this application, the terminal device determines the target TO determining manner (the first TO determining manner or the second TO determining manner) based on the indication information used to indicate the TO determining manner, so that the terminal device determines, based on the target TO determining manner, the time domain positions of the N TOs within the time domain period, repeating the uplink data for a plurality of times in the N TOs based on the repetition mechanism, and improving data transmission reliability.

Manner # C

The terminal device determines, based on the time domain resource allocation parameter, a TO determining manner to be used. For example:

The terminal device determines a start symbol of the first candidate TO within the time domain period #A; and

$$\frac{y_1}{x_1} \geq t_1$$

if , the terminal device determines the time domain positions of the N TOs in the second TO determining manner; or

$$\frac{y_1}{x_1} \leq t_1$$

if , the terminal device determines the time domain positions of the N TOs in the first TO determining manner, where $y_1$ represents a quantity of available symbols starting from the start symbol of the first candidate TO, the $y_1$ available symbols and symbols occupied by the first candidate TO are in a same slot, $x_1$ is determined based on the time domain resource allocation parameter, for example, indicated by the time domain resource allocation parameter, and may indicate a quantity of the symbols occupied by the first candidate TO, and $t_1$ is a preset value.

$y_1$ and $t_1$ may be specified in a protocol or a system, or may be delivered by the network device to the terminal device by using higher layer signaling (for example, RRC signaling) or bottom layer signaling (for example, a MAC CE or DCI).

Specifically, the terminal device may determine the start symbol of the first candidate TO within the time domain period #A based on the time domain period #A and the time domain resource allocation parameter. Starting from the start symbol of the first candidate TO, if there are the $y_1$ available symbols in the slot to which the first candidate TO belongs, $y_1$ is compared with $x_1$.

$$\frac{y_1}{x_1} \geq t_1$$

If , the terminal device determines the time domain positions of the N TOs in the second TO determining

$$\frac{y_1}{x_1} \leq t_1$$

manner. If , the terminal device determines the time domain positions of the N TOs in the first TO determining manner.

Therefore, according to the resource configuration method in this embodiment of this application, the terminal device receives the resource configuration information sent by the network device, and determines, based on the indication information used to indicate the time domain period or the indication information used to indicate the TO determining manner, the time domain positions of the N TOs within the time domain period, where the resource configuration information includes the indication information used to indicate the time domain period or the indication information used to indicate the TO determining manner, so that the terminal device repeatedly sends the uplink data on the N TOs, improving data transmission reliability;

in addition, the terminal device determines the target TO determining manner (the first TO determining manner or the second TO determining manner) by comparing the time domain length of the time domain period with the preset time domain length, so that the terminal device determines, based on the target TO determining manner, the time domain positions of the N TOs within the time domain period, repeating the uplink data for a plurality of times in the N TOs based on the repetition mechanism, and improving data transmission reliability; furthermore, for the target TO determining manner determined by the terminal device by comparing the time domain length of the time domain period with the preset time domain length, because the relationship between the time domain length of the time domain period and the preset time domain length is considered, the TO determined by the terminal device based on the target TO determining manner can be better applicable to the case in which the data is repeatedly sent within the time domain period; and

in addition, the terminal device determines the target TO determining manner (the first TO determining manner or the second TO determining manner) based on the indication information used to indicate the TO determining manner, so that the terminal device determines, based on the target TO determining manner, the time domain positions of the N TOs within the time domain period, repeating the uplink data for a plurality of times in the N TOs based on the repetition mechanism, and improving data transmission reliability.

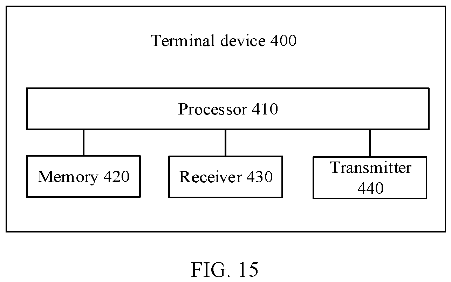

The foregoing describes the resource configuration method according to the embodiments of this application in detail with reference to FIG. 1 to FIG. 13. The following describes a communications apparatus according to the embodiments of this application with reference to FIG. 14 and FIG. 15. The technical features described in the method embodiments are also applicable to the following apparatus embodiments.

FIG. 14 is a schematic block diagram of a communications apparatus 300 according to an embodiment of this application. As shown in FIG. 14, the communications apparatus 300 includes:

a receiving unit 310, configured to receive resource configuration information sent by a network device, where the resource configuration information includes indication information used to indicate a time domain period and indication information used to indicate a transmission occasion TO determining manner, and the TO determining manner includes a first TO determining manner or a second TO determining manner; and

a processing unit 320, configured to determine, based on the resource configuration information, time domain positions of N TOs within the time domain period.

Therefore, according to the communications apparatus provided in this embodiment of this application, the communications apparatus receives the resource configuration information sent by the network device, and determines, based on the indication information used to indicate the time domain period and/or the indication information used to indicate the TO determining manner, the time domain positions of the N TOs within the time domain period, where the resource configuration information includes the indication information used to indicate the time domain period and/or the indication information used to indicate the TO determining manner, so that the communications apparatus repeatedly sends uplink data on the N TOs, improving data transmission reliability.

Optionally, the processing unit 320 is specifically configured to:
determine, in the first TO determining manner if a time domain length of the time domain period is greater than a preset time domain length, the time domain positions of the N TOs within the time domain period.

Therefore, the communications apparatus provided in this embodiment of this application determines a target TO determining manner (the first TO determining manner or the second TO determining manner) by comparing the time domain length of the time domain period with the preset time domain length, and determines the time domain positions of the N TOs within the time domain period in the first TO determining manner when the time domain length of the time domain period is greater than the preset time domain length, repeating the uplink data for a plurality of times in the N TOs based on a repetition mechanism, and improving data transmission reliability.

Optionally, the processing unit 320 is specifically configured to:
determine, in the second TO determining manner if the time domain length of the time domain period is less than the preset time domain length, the time domain positions of the N TOs within the time domain period.

Therefore, the communications apparatus provided in this embodiment of this application determines the target TO determining manner (the first TO determining manner or the second TO determining manner) by comparing the time domain length of the time domain period with the preset time domain length, and determines the time domain positions of the N TOs within the time domain period in the second TO determining manner when the time domain length of the time domain period is less than the preset time domain length, repeating the uplink data for a plurality of times in the N TOs based on the repetition mechanism, and improving data transmission reliability.

Optionally, the processing unit 320 is specifically configured to:
determine the time domain positions of the N transmission occasions within the time domain period based on the indication information used to indicate the TO determining manner.

Therefore, the communications apparatus provided in this embodiment of this application determines the target TO determining manner (the first TO determining manner or the second TO determining manner) by using the indication information used to indicate TO determining manner, so that the communications apparatus determines, based on the target TO determining manner, the time domain positions of the N TOs within the time domain period, repeating the uplink data for a plurality of times in the N TOs based on the repetition mechanism, and improving data transmission reliability.

Optionally, the second TO determining manner is:

determining the first Y available symbols within the time domain period as a time domain position of the first TO within the time domain period, where Y is an integer greater than or equal to 1; and
determining the first Z available symbols that are after the $n^{th}$ TO within the time domain period as a time domain position of the $(n+1)^{th}$ transmission occasion within the time domain period, where $1 \le n < N$, and Z is an integer greater than or equal to 1.

Optionally, the first Y available symbols within the time domain period are the first Y available symbols in a same slot.

Optionally, the first Z available symbols after the $n^{th}$ transmission occasion are the first Z available symbols in a same slot and after the $n^{th}$ transmission occasion.

Optionally, the second TO determining manner is:

determining start symbols of M candidate TOs within the time domain period, where M is an integer greater than or equal to 1;

determining Y available symbols from a start symbol of the $m^{th}$ candidate TO to a previous symbol of a start symbol of the $(m+1)^{th}$ candidate TO as a time domain position of a TO, where $1 \le m < M$, and Y is an integer greater than or equal to 1; and

determining Z available symbols from a start symbol of the $M^{th}$ candidate TO to the last symbol within the time domain period as a time domain position of the last TO within the time domain period, where Z is an integer greater than or equal to 1.

Optionally, the Y available symbols are in a same slot, and the Z available symbols are in a same slot.

The resource configuration information further includes a time domain resource allocation parameter used to determine a time domain position of the first TO; and

optionally the processing unit 320 is specifically configured to determine the start symbols of the M candidate TOs based on the time domain period and the time domain resource allocation parameter.

The communications apparatus 300 may correspond to (for example, may be configured in or may be) the terminal device described in the method 200. In addition, modules or units in the communications apparatus 300 are separately configured to perform actions or processing processes performed by the terminal device in the method 200. To avoid repetition, detailed descriptions thereof are omitted herein.

In this embodiment of this application, the communications apparatus 300 may be a terminal device. FIG. 15 is a schematic structural diagram of a terminal device 400 for resource configuration according to an embodiment of this application. As shown in FIG. 15, the terminal device 400 may include a processor 410, a transmitter 420, and a receiver 430. The processor 410, the transmitter 420, and the receiver 430 are communicatively connected to each other. Optionally, the terminal device further includes a memory 440. The memory 440 is connected to the processor 410. Optionally, the processor 410, the memory 440, the transmitter 420, and the receiver 430 may be connected to each other. The memory 440 may be configured to store an instruction. The processor 410 is configured to execute the instruction stored in the memory 440, to control the transmitter 420 to send information or the receiver 430 to receive a signal.

In this case, the receiving unit 310 in the communications apparatus 300 shown in FIG. 14 may correspond to the receiver 430 in the terminal device 400 shown in FIG. 15, and the processing unit 320 in the communications apparatus 300 shown in FIG. 14 may correspond to the processor 410 in the terminal device 400 shown in FIG. 15.

In the embodiments of this application, the communications apparatus 300 may be a chip (or a chip system) installed in a terminal device. In this case, the communications apparatus 300 may include a processor and an input/output interface. The processor may be connected to another element in the terminal device in which the processor is located or a transceiver of a network device by using the input/output interface. Optionally, the communications apparatus further includes a memory. The memory is connected to the processor. Optionally, the processor, the memory, and the transceiver may be connected to each other. The memory may be configured to store an instruction. The processor is configured to execute the instruction stored in the memory, to control the transceiver to send information or a signal.

In this case, the receiving unit 310 in the communications apparatus 300 shown in FIG. 14 may correspond to the input interface, and the processing unit 320 in the communications apparatus 300 shown in FIG. 14 may correspond to the processor.

It should be noted that the foregoing method embodiment in the embodiments of this application may be applied to a processor, or implemented by a processor. The processor may be an integrated circuit chip and has a signal processing capability. In an implementation process, the steps in the foregoing method embodiment can be completed by using a hardware integrated logic circuit in the processor or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in the embodiments of this application. The general purpose processor may be a microprocessor, or the processor may be any conventional processor or the like. The steps of the method disclosed with reference to the embodiments of this application may be directly executed and completed by using a hardware decoding processor, or may be executed and completed by using a combination of hardware and software modules in a decoding processor. The software module may be located in a mature storage medium in the art, for example, a random access memory, a flash memory, a read-only memory, a programmable read-only memory or an electrically erasable programmable memory, or a register. The storage medium is located in a memory. The processor reads information in the memory, and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment, and details are not described herein again.

In the several embodiments provided in this application, it should be understood that the disclosed system, apparatus, and method may be implemented in other manners. For example, the apparatus embodiment described above is merely an example. For example, division into units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the method in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1.   A resource configuration method, applied to a communications apparatus, and comprising:

receiving resource configuration information sent by a network device (S210), wherein the resource configuration information comprises indication information used to indicate a time domain period, indication information used to indicate a transmission occasion determining manner, and a time domain resource allocation parameter, wherein the transmission occasion determining manner comprises a first transmission occasion determining manner or a second transmission occasion determining manner; and determining (S220), based on the resource configuration information, time domain positions of N transmission occasions within the time domain period, wherein in case the transmission occasion determining manner indicated by indication information is the second transmission occasion determining manner, each transmission occasion of the N transmission occasions is located in a candidate transmission occasion among M candidate transmission occasions, and all symbols of each transmission occasion of the N transmission occasions are consecutive and locate in a same slot, wherein the M candidate transmission occasions are determined according to the time domain resource allocation parameter.

2. The method according to claim 1, wherein the determining, based on the resource configuration information, time domain positions of N transmission occasions within the time domain period comprises: determining, based on the indication information used to indicate the transmission occasion determining manner, the time domain positions of the N transmission occasions within the time domain period.

3. The method according to claim 1, wherein determining, based on the resource configuration information, time domain positions of N transmission occasions within the time domain period comprises:

   determining start symbols of M candidate transmission occasions within the time domain period, wherein M is an integer greater than or equal to 1;
   determining Y consecutive available symbols in a same slot and from a start symbol of the $m^{th}$ candidate transmission occasion to a previous symbol of a start symbol of the $(m+1)^{th}$ candidate transmission occasion as a time domain position of a transmission occasion, wherein $1 \leq m < M$, and Y is an integer greater than or equal to 1.

4. The method according to claim 1 or 3, wherein determining, based on the resource configuration information, time domain positions of N transmission occasions within the time domain period comprises: determining Z consecutive available symbols in a same slot and from a start symbol of the $M^{th}$ candidate transmission occasion to the last symbol within the time domain period as a time domain position of the last transmission occasion within the time domain period, wherein Z is an integer greater than or equal to 1.

5. A communications apparatus, comprising:

   a receiving unit (310), configured to receive resource configuration information sent by a network device, wherein the resource configuration information comprises indication information used to indicate a time domain period, indication information used to indicate a transmission occasion determining manner, and a time domain resource allocation parameter, wherein the transmission occasion determining manner comprises a first transmission occasion determining manner or a second transmission occasion determining manner; and
   a processing unit (320), configured to determine, based on the resource configuration information, time domain positions of N transmission occasions within the time domain period, wherein in case the transmission occasion determining manner indicated by indication information is the
   second transmission occasion determining manner, each transmission occasion of the N transmission occasions is located in a candidate transmission occasion among M candidate transmission occasions, and all symbols of each transmission occasion of the N transmission occasions are consecutive and locate in a same slot, wherein the M candidate transmission occasions are determined according to the time domain resource allocation parameter.

6. The communications apparatus according to claim 5, wherein the processing unit is specifically configured to:
   determine, based on the indication information used to indicate the transmission occasion determining manner, the time domain positions of the N transmission occasions within the time domain period.

7. The communications apparatus according to claim 5, wherein the processing unit is specifically configured to:

   determine start symbols of M candidate transmission occasions within the time domain period, wherein M is an integer greater than or equal to 1; and
   determine Y consecutive available symbols in a same slot and from a start symbol of the $m^{th}$ candidate transmission occasion to a previous symbol of a start symbol of the $(m+1)^{th}$ candidate transmission occasion as a time domain position of a transmission occasion, wherein $1 \leq m < M$, and Y is an integer greater than or equal to 1.

8. The communications apparatus according to claim 5 or 7, wherein the processing unit is specifically configured to:
determine Z consecutive available symbols in a same slot and from a start symbol of the $M^{th}$ candidate transmission occasion to the last symbol within the time domain period as a time domain position of the last transmission occasion within the time domain period, wherein Z is an integer greater than or equal to 1.

9. A computer program product, wherein the computer program product comprises computer program code; and when the computer program code is run by a communications unit and a processing unit or a transceiver and a processor of a communications device, the communications device is enabled to perform the method according to any one of claims 1 to 4.

**Patentansprüche**

1. Ressourcenkonfigurationsverfahren, das auf eine Kommunikationsvorrichtung angewendet wird und Folgendes umfasst:

Empfangen von Ressourcenkonfigurationsinformationen, die von einer Netzwerkeinrichtung gesendet werden (S210), wobei die Ressourcenkonfigurationsinformationen Anzeigeinformationen zum Anzeigen eines Zeitdomänenzeitraums, Angabeinformationen zum Angeben einer Übertragungsanlassbestimmungsart und einen Zeitbereichsressourcenzuweisungsparameter umfassen, wobei die Übertragungsanlassbestimmungsart eine erste Übertragungsanlassbestimmungsart oder eine zweite Übertragungsanlassbestimmungsart umfasst; und ein Bestimmen (S220) von Zeitdomänenpositionen von N Übertragungsanlässen innerhalb des Zeitdomänenzeitraums auf Grundlage der Ressourcenkonfigurationsinformationen, wobei, falls die durch die Angabeinformationen angegebene Bestimmungsmethode für Übertragungsanlässe die zweite Bestimmungsmethode für Übertragungsanlässe ist, jeder Übertragungsanlass der N Übertragungsanlässe in einem Kandidaten-Übertragungsanlass unter M Kandidaten-Übertragungsanlässen liegt, und alle Symbole jedes Übertragungsanlasses der N Übertragungsanlässe aufeinander folgend sind und sich in einem gleichen Slot befinden, wobei die M Kandidaten-Übertragungsanlässe entsprechend dem Zeitdomänen-Ressourcenzuweisungsparameter bestimmt werden.

2. Verfahren nach Anspruch 1, wobei das Bestimmen von Zeitdomänenpositionen von N Übertragungsanlässen innerhalb des Zeitdomänenzeitraums auf der Grundlage der Ressourcenkonfigurationsinformationen Folgendes umfasst:
Bestimmen der Zeitdomänenpositionen der N Übertragungsanlässe innerhalb des Zeitdomänenzeitraums auf der Grundlage der zum Angeben der Bestimmungsmethode für Übertragungsanlässe verwendeten Angabeinformationen.

3. Verfahren nach Anspruch 1, wobei das Bestimmen von Zeitdomänenpositionen von N Übertragungsanlässen innerhalb des Zeitdomänenzeitraums auf der Grundlage der Ressourcenkonfigurationsinformationen Folgendes umfasst:

Bestimmen von Startsymbolen von M möglichen Übertragungsanlässen innerhalb des Zeitdomänenzeitraums, wobei M eine Ganzzahl größer oder gleich 1 ist;
Bestimmen von Y aufeinanderfolgenden verfügbaren Symbolen in einem gleichen Slot und von einem Startsymbol dem m. möglichen Übertragungsanlass bis zu einem vorherigen Symbol eines Startsymbols des (m+1). möglichen Übertragungsanlasses als Zeitdomänenposition eines Übertragungsanlasses, wobei $1 \leq m < M$ und Y eine Ganzzahl größer oder gleich 1 ist.

4. Verfahren nach Anspruch 1 oder 3, wobei das Bestimmen von Zeitdomänenpositionen von N Übertragungsanlässen innerhalb des Zeitdomänenzeitraums auf der Grundlage der Ressourcenkonfigurationsinformationen Folgendes umfasst:
Bestimmen von Z aufeinanderfolgenden verfügbaren Symbolen in einem gleichen Slot und von einem Startsymbol des M. möglichen Übertragungsanlasses bis zum letzten Symbol innerhalb des Zeitdomänenzeitraums als Zeitdomänenposition des letzten Übertragungsanlasses innerhalb des Zeitdomänenzeitraums, wobei Z eine Ganzzahl größer oder gleich 1 ist.

5. Kommunikationsvorrichtung, umfassend:

eine Empfangseinheit (310), die dazu konfiguriert ist, von einer Netzwerkeinrichtung gesendete Ressourcenkonfigurationsinformationen zu empfangen, wobei die Ressourcenkonfigurationsinformationen Angabeinformationen umfassen, die zur Angabe einer Zeitdomänenperiode verwendet werden, Angabeinformationen, die zum Angeben einer Übertragungsanlassbestimmungsmethode und eines Zeitdomänenressourcenzuweisungsparameters verwendet werden, wobei die Übertragungsanlassbestimmungsmethode eine erste Übertragungsanlassbestimmungsmethode oder eine zweite Übertragungsanlassbestimmungsmethode umfasst; und

eine Verarbeitungseinheit (320), die so konfiguriert ist, dass sie auf der Grundlage der Ressourcenkonfigurationsinformationen Zeitdomänenpositionen von N Übertragungsanlässen innerhalb der Zeitdomänenperiode bestimmt, wobei, falls die durch die Anzeigeinformationen angegebene Bestimmungsmethode für Übertragungsanlässe die zweite Bestimmungsmethode für Übertragungsanlässe ist, jeder Übertragungsanlass der N Übertragungsanlässe in einem Kandidaten-Übertragungsanlass unter M Kandidaten-Übertragungsanlässen liegt, und alle Symbole jedes Übertragungsanlasses der N Übertragungsanlässe aufeinander folgend sind und sich in einem gleichen Slot befinden, wobei die M Kandidaten-Übertragungsanlässe entsprechend dem Zeitdomänen-Ressourcenzuweisungsparameter bestimmt werden.

6. Kommunikationsvorrichtung nach Anspruch 5, wobei die Verarbeitungseinheit speziell zu Folgendem konfiguriert ist:
Bestimmen der Zeitdomänenpositionen der N Übertragungsanlässe innerhalb des Zeitdomänenzeitraums auf der Grundlage der zum Angeben der Bestimmungsmethode für Übertragungsanlässe verwendeten Angabeinformationen.

7. Kommunikationsvorrichtung nach Anspruch 5, wobei die Verarbeitungseinheit speziell zu Folgendem konfiguriert ist:

Bestimmen von Startsymbolen von M möglichen Übertragungsanlässen innerhalb des Zeitdomänenzeitraums, wobei M eine Ganzzahl größer oder gleich 1 ist; und
Bestimmen von Y aufeinanderfolgenden verfügbaren Symbolen in einem gleichen Slot und von einem Startsymbol dem m. möglichen Übertragungsanlass bis zu einem vorherigen Symbol eines Startsymbols des (m+1). möglichen Übertragungsanlasses als Zeitdomänenposition eines Übertragungsanlasses, wobei 1≤m<M und Y eine Ganzzahl größer oder gleich 1 ist.

8. Kommunikationsvorrichtung nach Anspruch 5 oder 7, wobei die Verarbeitungseinheit speziell zu Folgendem konfiguriert ist:
Bestimmen von Z aufeinanderfolgenden verfügbaren Symbolen in einem gleichen Slot und von einem Startsymbol des M. möglichen Übertragungsanlasses bis zum letzten Symbol innerhalb des Zeitdomänenzeitraums als Zeitdomänenposition des letzten Übertragungsanlasses innerhalb des Zeitdomänenzeitraums, wobei Z eine Ganzzahl größer oder gleich 1 ist.

9. Computerprogrammprodukt, wobei das Computerprogrammprodukt Computerprogrammcode umfasst; und wenn der Computerprogrammcode von einer Kommunikationseinheit und einer Verarbeitungseinheit oder einem Transceiver und einem Prozessor einer Kommunikationseinrichtung ausgeführt wird, die Kommunikationseinrichtung in die Lage versetzt wird, das Verfahren nach einem der Ansprüche 1 bis 4 auszuführen.

**Revendications**

1. Procédé de configuration de ressource, appliqué à un appareil de communication, et comprenant :

la réception des informations de configuration de ressource envoyées par un dispositif réseau (S210), dans lequel les informations de configuration de ressource comprennent des informations d'indication utilisées pour indiquer une période de domaine temporel, des informations d'indication utilisées pour indiquer une manière de déterminer une occasion de transmission, et un paramètre d'attribution de ressource dans le domaine temporel, dans lequel la manière de déterminer une occasion de transmission comprend une première manière de déterminer une occasion de transmission ou une seconde manière de déterminer une occasion de transmission ; et
la détermination (S220), sur la base des informations de configuration de ressource, des positions dans le domaine temporel de N occasions de transmission dans la période du domaine temporel, dans lequel dans le cas où la manière de déterminer une occasion de transmission indiquée par les informations d'indication est la seconde manière de déterminer une occasion de transmission, chaque occasion de transmission des N occasions de transmission est située dans une occasion de transmission candidate parmi M occasions de transmission candidates, et tous les symboles de chaque occasion de transmission parmi les N occasions de transmission sont consécutifs et situés dans un même emplacement, dans lequel les M occasions de transmission candidates sont déterminées selon le paramètre d'attribution des ressources de domaine temporel.

**2.** Procédé selon la revendication 1, dans lequel la détermination, sur la base des informations de configuration de ressource, des positions dans le domaine temporel de N occasions de transmission dans la période du domaine temporel comprend : la détermination, sur la base des informations d'indication utilisées pour indiquer la manière de déterminer l'occasion de transmission, des positions dans le domaine temporel des N occasions de transmission dans la période du domaine temporel.

**3.** Procédé selon la revendication 1, dans lequel la détermination, sur la base des informations de configuration de ressource, des positions dans le domaine temporel de N occasions de transmission dans la période du domaine temporel comprend :

la détermination des symboles de début de M occasions de transmission candidates dans la période du domaine temporel, dans lequel M est un nombre entier supérieur ou égal à 1 ; la détermination de Y symboles disponibles consécutifs dans un même emplacement et depuis un symbole de début de la $m^e$ occasion de transmission candidate jusqu'à un symbole précédent d'un symbole de début de la $(m+1)^e$ occasion de transmission candidate en tant que position dans le domaine temporel d'une occasion de transmission, dans lequel $1 \leq m < M$, et Y est un nombre entier supérieur ou égal à 1.

**4.** Procédé selon la revendication 1 ou 3, dans lequel la détermination, sur la base des informations de configuration de ressource, des positions dans le domaine temporel de N occasions de transmission dans la période du domaine temporel comprend : la détermination de Z symboles disponibles consécutifs dans un même emplacement et depuis un symbole de début de la $M^e$ occasion de transmission candidate jusqu'au dernier symbole dans la période du domaine temporel en tant que position dans le domaine temporel de la dernière occasion de transmission dans la période du domaine temporel, dans lequel Z est un entier supérieur ou égal à 1.

**5.** Appareil de communication, comprenant :

une unité de réception (310), configurée pour recevoir des informations de configuration de ressource envoyées par un dispositif réseau, dans lequel les informations de configuration de ressource comprennent des informations d'indication utilisées pour indiquer une période de domaine temporel, des informations d'indication utilisées pour indiquer une manière de déterminer une occasion de transmission, et un paramètre d'attribution de ressource dans le domaine temporel, dans lequel la manière de déterminer une occasion de transmission comprend une première manière de déterminer une occasion de transmission ou une seconde manière de déterminer une occasion de transmission ; et une unité de traitement (320), configurée pour déterminer, sur la base des informations de configuration de ressource, des positions dans le domaine temporel de N occasions de transmission dans la période du domaine temporel, dans lequel dans le cas où la manière de déterminer une occasion de transmission indiquée par les informations d'indication est la seconde manière de déterminer une occasion de transmission, chaque occasion de transmission des N occasions de transmission est située dans une occasion de transmission candidate parmi M occasions de transmission candidates, et tous les symboles de chaque occasion de transmission parmi les N occasions de transmission sont consécutifs et situés dans un même emplacement, dans lequel les M occasions de transmission candidates sont déterminées selon le paramètre d'attribution des ressources de domaine temporel.

**6.** Appareil de communication selon la revendication 5, dans lequel l'unité de traitement est spécifiquement configurée pour : déterminer, sur la base des informations d'indication utilisées pour indiquer la manière de déterminer l'occasion de transmission, les positions dans le domaine temporel des N occasions de transmission dans la période du domaine temporel.

**7.** Appareil de communication selon la revendication 5, dans lequel l'unité de traitement est spécifiquement configurée pour :

déterminer des symboles de début de M occasions de transmission candidates dans la période du domaine temporel, dans lequel M est un nombre entier supérieur ou égal à 1 ; et déterminer de Y symboles disponibles consécutifs dans un même emplacement et depuis un symbole de début de la $m^e$ occasion de transmission candidate jusqu'à un symbole précédent d'un symbole de début de la $(m+1)^e$ occasion de transmission candidate en tant que position dans le domaine temporel d'une occasion de transmission, dans laquelle $1 \leq m < M$, et Y est un nombre entier supérieur ou égal à 1.

**8.** Appareil de communication selon la revendication 5 ou 7, dans lequel l'unité de traitement est spécifiquement configurée pour : déterminer Z symboles disponibles consécutifs dans un même emplacement et depuis un symbole de début de la $M^e$ occasion de transmission candidate jusqu'au dernier symbole dans la période du domaine temporel en tant que position dans le domaine temporel de la dernière occasion de transmission dans la période du domaine temporel, dans lequel Z est un entier supérieur ou égal à 1.

9. Produit de programme informatique, dans lequel le produit de programme informatique comprend un code de programme informatique ; et lorsque le code de programme informatique est exécuté par une unité de communication et une unité de traitement ou un émetteur-récepteur et un processeur d'un dispositif de communication, le dispositif de communication est en mesure de réaliser le procédé selon l'une quelconque des revendications 1 à 4.

FIG. 1

S210. Resource configuration information

S220. Determine, based on the resource configuration information, time domain positions of N TOs within a time domain period

FIG. 2

FIG. 3

FIG. 4

FIG. 5

Slot #1    Slot #2    Slot #3

TO #1    TO #2

Time domain
period #A

FIG. 6

Slot #1    Slot #2    Slot #3

TO #1   TO #2    TO #3

Time domain
period #A

FIG. 7

Slot #1    Slot #2    Slot #3

TO #1   TO #2

Time domain
period #A

FIG. 8

FIG. 9

FIG. 10

FIG. 11

Slot #1 Slot #2 Slot #3

TO #1 TO #2

Time domain
period #A

FIG. 12

Slot #1 Slot #2 Slot #3

TO #1 TO #2

Time domain
period #A

FIG. 13

Apparatus 300

Receiving unit 310

Processing unit 320

FIG. 14

Terminal device 400

Processor 410

Memory 420　　Receiver 430　　Transmitter 440

FIG. 15